(19) 

**Europäisches Patentamt**

**European Patent Office**

**Office européen des brevets**

(11) **EP 4 641 136 A1**

(12) **EUROPEAN PATENT APPLICATION**

published in accordance with Art. 153(4) EPC

(43) Date of publication:
**29.10.2025 Bulletin 2025/44**

(21) Application number: **23905386.1**

(22) Date of filing: **10.10.2023**

(51) International Patent Classification (IPC):
**G01C 21/00** (2006.01)    **A01D 34/00** (2006.01)

(52) Cooperative Patent Classification (CPC):
**A01D 34/00; G01C 21/00**

(86) International application number:
**PCT/CN2023/123748**

(87) International publication number:
**WO 2024/131213 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.12.2022  CN 202211665277**
**26.07.2023  CN 202310930640**

(71) Applicant: **Shenzhen LDrobot Co., Ltd.
Shenzhen, Guangdong 518000 (CN)**

(72) Inventors:
• **GUO, Gaihua
  Shenzhen, Guangdong 518000 (CN)**
• **LI, Shaohai
  Shenzhen, Guangdong 518000 (CN)**
• **LIU, Bin
  Shenzhen, Guangdong 518000 (CN)**
• **LI, Ang
  Shenzhen, Guangdong 518000 (CN)**
• **ZHOU, Wei
  Shenzhen, Guangdong 518000 (CN)**

(74) Representative: **Primiceri, Maria Vittoria et al
Praxi Intellectual Property S.p.A.
Via Leonida Bissolati, 20
00187 Roma (IT)**

(54) **ROBOT POSITIONING METHODS AND SYSTEM AND ROBOT**

(57)    Robot positioning methods and system and a robot. A positioning wire is provided within a preset area range of robot movement, and at least one end of two ends of the positioning wire is connected to a signal processor. A method comprises: after a robot has sensed a boundary signal of the positioning wire, determining a first time point and a second time point at which positioning signals in different directions reach an end point by means of transmission along the positioning wire according to a current location of the robot; on the basis of the first time point, the second time point, the signal transmission speed of the positioning wire and the length of the positioning wire, determining the distance between the current location and the signal processor; and on the basis of the distance between the current location and the signal processor, determining positioning information of the robot.

FIG. 1

## Description

## CROSS-REFERENCE TO RELATED APPLICATIONS

This application claims priority to Chinese patent application No. 2022116652777, entitled "ROBOT POSITIONING METHOD, SYSTEM, APPARATUS, SIGNAL PROCESSOR AND STORAGE MEDIUMN" filed December 23, 2022, the entire contents of which are incorporated herein by reference.

This application claims priority to Chinese patent application No. 2023109306401, entitle "LAWN-MOWING ROBOT AND POSITIONING METHOD THEREOF" filed July 26, 2023, the entire contents of which are incorporated herein by reference.

## TECHNICAL FIELD

The present disclosure relates to the technical field of intelligent positioning, and specifically to a robot positioning method and system, and a robot.

## BACKGROUND

At present, when a robot walks in a preset area, the robot usually needs to be positioned to determine the working position of the robot, so as to control the walking path of the robot according to positioning information of the robot.

A laser positioning technology is generally used to position the server in the existing technology. However, when the environment of the preset area is complex, e.g., when the ground is uneven or there are many obstruction objects, the robot positioning accuracy of the laser positioning method will decrease, affecting the movement of the robot. In addition, laser positioning requires the installation of laser sensors, which increases the cost of the robot.

## SUMMARY

### Technical problem

An objective of embodiments of the present disclosure is to provide a robot positioning method and system, and a robot.

### Technical scheme

The following technical schemes are adopted in embodiments of the present disclosure.

In accordance with a first aspect of the present disclosure, an embodiment provides a robot positioning method, where a positioning wire is arranged in a preset area in which a robot walks, and at least one of two ends of the positioning wire is connected to a signal processor, the method includes:

determining, in response to the robot detecting a boundary signal of the positioning wire, a first time point and a second time point at which positioning signals with different directions reach an end point through transmission along the positioning wire according to a current location of the robot;

determining a distance between the current location and the signal processor based on the first time point, the second time point, a signal transmission speed of the positioning wire, and a length of the positioning wire; and

determining positioning information of the robot based on the distance.

In accordance with a second aspect of the present disclosure, an embodiment provides a robot positioning method, where a positioning wire is arranged in a preset area in which a robot walks, and the positioning wire is configured to transmit a positioning signal, the method includes:

determining a plurality of pieces of positioning information of the robot by the method of any one of the embodiments of the first aspect in a process in which the robot moves along the positioning wire by a preset positioning distance, where the preset positioning distance is not less than a working distance of the robot; and

matching the plurality of pieces of positioning information against a pre-established positioning information set to determine a current location of the robot.

In accordance with a third aspect of the present disclosure, an embodiment provides a robot positioning system, where a positioning wire is arranged in a preset area in which a robot walks, and at least one of two ends of the positioning wire is connected to a signal processor, the system includes:

a first determining unit, configured for determining, in response to the robot detecting a boundary signal of the positioning wire, a first time point and a second time point at which positioning signals with different directions reach an end point through transmission along the positioning wire according to a current location of the robot;

a second determining unit, configured for determining a distance between the current location and the signal processor based on the first time point, the second time point, a signal transmission speed of the positioning wire, and a length of the positioning wire; and

a third determining unit, configured for determining positioning information of the robot based on the distance.

In accordance with a fourth aspect of the present disclosure, an embodiment provides a robot, including:

a memory, configured for storing a computer program; and

a processor, configured for executing the computer program, where the computer program, when executed by the processor, causes the processor to implement the robot positioning method of any one of the embodiments of the first aspect or the second aspect.

**Beneficial effects**

The robot positioning method provided by the embodiments of present disclosure has the following beneficial effects. When the robot detects a boundary signal of the positioning wire, the transmission time and transmission direction of the positioning signal according to the current location on the positioning wire are used to position the robot in the preset area, and the walking path of the robot can be adjusted according to the positioning of the robot. This method does not require the installation of a lidar and therefore can be achieved at low costs.

The positioning system provided by the embodiments of present disclosure has the following beneficial effects. When the robot detects a boundary signal of the positioning wire, the transmission time and transmission direction of the positioning signal according to the current location on the positioning wire are used to position the robot in the preset area, and the walking path of the robot can be adjusted according to the positioning of the robot. This system does not require the installation of a lidar and therefore can be achieved at low costs.

**BRIEF DESCRIPTION OF DRAWINGS**

To describe the technical schemes of the embodiments of the present disclosure more clearly, the following briefly introduces the accompanying drawings required for describing the embodiments or example technologies. Apparently, the accompanying drawings in the following description show only some embodiments of the present disclosure, and those having ordinary skills in the art may still derive other drawings from these accompanying drawings without creative efforts.

FIG. 1 is a first schematic flowchart of a robot positioning method according to an embodiment of the present disclosure;

FIG. 2a is a first schematic diagram of a positioning signal transmission direction according to an embodiment of the present disclosure;

FIG. 2b is a second schematic diagram of a positioning signal transmission direction according to an embodiment of the present disclosure;

FIG. 2c is a third schematic diagram of a positioning signal transmission direction according to an embodiment of the present disclosure;

FIG. 2d is a fourth schematic diagram of a positioning signal transmission direction according to an embodiment of the present disclosure;

FIG. 3 is a second schematic flowchart of a robot positioning method according to an embodiment of the present disclosure;

FIG. 4a is a first example diagram of positioning according to an embodiment of the present disclosure;

FIG. 4b is a second example diagram of positioning according to an embodiment of the present disclosure;

FIG. 4c is a third example diagram of positioning according to an embodiment of the present disclosure;

FIG. 4d is a fourth example diagram of positioning according to an embodiment of the present disclosure;

FIG. 4e is a fifth example diagram of positioning according to an embodiment of the present disclosure;

FIG. 5 is a sixth example diagram of positioning according to an embodiment of the present disclosure;

FIG. 6 is a schematic structural diagram of a robot positioning system according to an embodiment of the present disclosure; and

FIG. 7 is a schematic structural diagram of a signal processor according to embodiment of the present disclosure.

**DETAILED DESCRIPTION**

To make the objectives, technical schemes, and advantages of the present disclosure clearer, the present disclosure is described in further detail with reference to accompanying drawings and embodiments. It is to be understood that the specific embodiments described herein are merely used for explaining the present disclosure, and are not intended to limit the present disclosure.

It should be noted that orientation or position relationships indicated by the terms such as "on," "below," "left," and "right" are based on orientation or position relationships shown in the accompanying drawings, and are used only for ease of description, rather than indicating or implying that the mentioned apparatus or component need to have a particular orientation or need to be constructed and operated in a particular orientation. Therefore, such terms should not be construed as limiting of the present disclosure. For those having ordinary skills in the art, the specific meanings of the above terms can be understood according to specific circumstances. The terms such as "first," and "second" are used merely for ease of description, and shall not be construed as indicating or implying relative importance or implying the number of technical features. The term "plurality of" means two or more, unless otherwise explicitly specified.

To illustrate the technical schemes provided by the present disclosure, a detailed description is given below in conjunction with the accompanying drawings and embodiments.

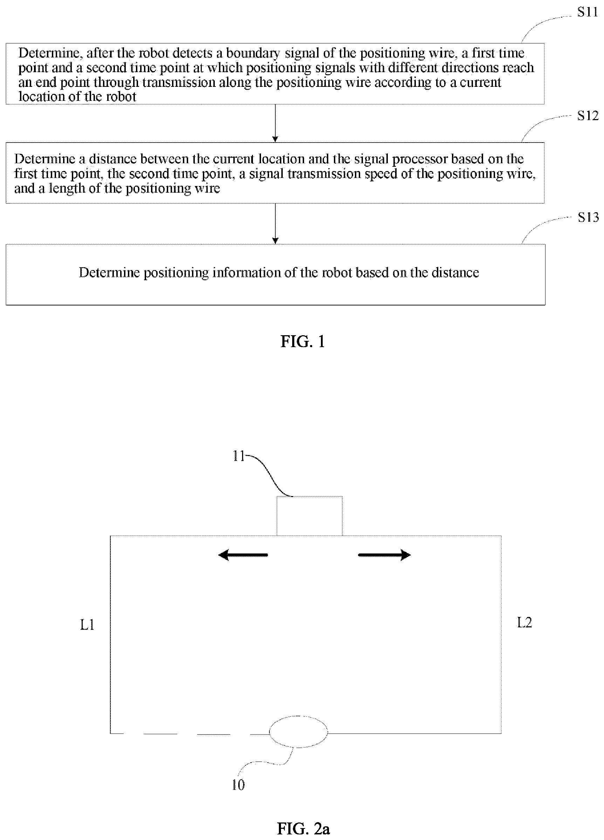

FIG. 1 is a schematic flowchart of a robot positioning method according to an embodiment of the present disclosure. A positioning wire is arranged in a preset area in which a robot walks, and at least one of two ends of the positioning wire is connected to a signal processor. The method includes the following steps S11 to S13.

At S11, after the robot detects a boundary signal of the positioning wire, a first time point and a second time point at which positioning signals with different directions reach an end point through transmission along the positioning wire according to a current location of the robot are determined.

In an application, the boundary signal is transmitted on the positioning wire, and if the robot detects the boundary signal on the positioning wire when walking in a preset area, a first time point and a second time point at which positioning signals with different directions reach an end point through transmission along the positioning wire are determined according to the current location of the robot. The end point may be a position on the positioning wire which corresponds to the current location of the robot, or may be one or two ends of the positioning wire which is or are connected to a base station, which is not limited in the present disclosure.

It can be understood that the signal processor is a device independent of the robot, is configured for generating a positioning signal and/or a boundary signal, and is, for example, arranged on a base station. A similar signal processor configured for processing the positioning signal may also be arranged on the robot.

At S12, a distance between the current location and the signal processor is determined based on the first time point, the second time point, a signal transmission speed of the positioning wire, and a length of the positioning wire.

In an application, the distance between the current location of the robot and the signal processor can be determined according to the determined first time point and second time point at which positioning signals with different directions reach the end point through transmission along the positioning wire, the signal transmission speed of the positioning wire, and the length of the entire positioning wire.

It should be understood that since the robot begins to determine the distance between the current location and the signal processor only after detecting the boundary signal of the positioning wire, the robot is currently very close to the positioning wire or has already come into contact with the positioning wire, so the current location of the robot can be understood as a position on the positioning wire at which the robot is located.

At S13, positioning information of the robot is determined based on the distance.

In a practical application, the signal processor may be arranged in a base station, and the location of the base station or the location of the signal processor is preset or known in advance, or the signal processor may be arranged in the robot. After the distance between the current location of the robot and the signal processor is determined, the current location of the robot can be determined according to the location of the signal processor and the distance information. For example, the location of the signal processor is a coordinate origin position (0, 0).

It should be noted that the positioning wire being arranged in the preset area may be understood as that the positioning wire may be arranged at an edge of the preset area or at a position which is distant from the preset area by a preset distance. For example, when the robot is a lawn mower, the positioning wire may be arranged at a boundary of an area to be mowed or at a position which is distant from a boundary of the area to be mowed by a preset distance of, for example, 5 cm, 10 cm, etc. The positioning wire may be buried under ground. When the robot walks to the vicinity of the positioning wire or has walked to a position above the positioning wire, whether the robot has walked to a boundary of the preset area may be determined based on whether a boundary signal on the positioning wire is detected, and then the positioning of the robot is performed, thereby preventing the robot from walking out of the preset area, and ensuring the normal control over the robot.

In an embodiment, the method further includes:

determining whether the robot has moved to a charging base station; and

when determining that the robot has moved to the charging base station, stopping the transmission of the boundary signal and/or the positioning signal.

If the robot moves to a charging base station during walking in the preset area, it can be determined that the robot is at the charging base station, so it is not necessary to position the robot, i.e., it is not necessary to determine whether the robot detects the positioning wire or transmits a positioning signal. Therefore, to reduce the loss, the signal processor may be controlled to stop the transmission of the boundary signal and/or the positioning signal.

It should be noted that whether the robot has moved to the charging base station may be determined based on whether the robot is connected to the charging base station, which is not limited in the present disclosure.

In an embodiment, determining positioning information of the robot based on the distance includes:

> sending, by the signal processor, the distance to the robot, and determining, by the robot, the positioning information based on the distance; or

> determining, by the signal processor, the positioning information of the robot based on the distance and sending the positioning information to the robot.

In an application, when the signal processor is arranged on the base station, the signal processor acquires the distance and sends the distance to the robot, and the robot determines the positioning information based on the distance, or the signal processor determines the positioning information of the robot and sends the positioning information to the robot.

Alternatively, it may also include determining, by the robot, the positioning information of the robot based on the distance. In an application, when the signal processor is arranged on the robot, the robot determines the positioning information of the robot based on the distance.

In this embodiment, after the distance between the signal processor and the current location of the robot is determined, the signal processor may determine the positioning information of the robot, or the robot may determine its own positioning information. Regardless of which of the two manners is used to determine the positioning information, the current positioning information of the robot can be determined. The robot can move according to a preset path after learning its own positioning information.

It should also be noted that the robot in the present disclosure may be, but is not limited to, a lawn mower. The lawn mower is used for mowing a lawn in a preset area. Through accurate positioning of the lawn mower, the working status of the lawn mower can be determined, and the lawn mower can be controlled based on the positioning information, thus optimizing a mowing path of the lawn mower.

Based on the above, in the present disclosure, when the robot detects a boundary signal of the positioning wire, the transmission time and transmission direction of the positioning signal according to the current location on the positioning wire are used to position the robot in the preset area, and the walking path of the robot can be adjusted according to the positioning of the robot. This method does not require the installation of a lidar and therefore can be achieved at low costs.

In an embodiment, S11 includes the following steps S11a or S11b.

At S11a, a first time point at which a first positioning signal with a first direction generated by the robot at the current location reaches the end point through transmission along the positioning wire and a second time point at which a second positioning signal with a second direction generated by the robot at the current location reaches the end point through transmission along the positioning wire are determined.

In an application, the signal processor arranged in the robot generates a first positioning signal with a first direction and a second positioning signal with a second direction, and then respectively determines a first time point at which the first positioning signal reaches the end point through transmission along the positioning wire and a second time point at which the second positioning signal reaches the end point through transmission along the positioning wire.

At S11b, a first time point at which a first positioning signal generated by a base station reaches the current location of the robot through transmission in a first direction along the positioning wire and a second time point at which a second positioning signal generated by the base station reaches the current location of the robot through transmission in a second direction along the positioning wire are determined. A location of the base station is a location of the end point.

In an application, the signal processor arranged in the base station generates a first positioning signal with a first direction and a second positioning signal with a second direction, and then respectively determines a first time point at which the first positioning signal reaches the end point through transmission along the positioning wire and a second time point at which the second positioning signal reaches the end point through transmission along the positioning wire.

In this embodiment, determining the first time point and the second time point at which the positioning signals with the different directions reach the end point through transmission along the second positioning wire according to the current location of the robot may include determining the first time point at which the first positioning signal with the first direction reaches the end point through transmission along the positioning wire and the second time point at which the second positioning signal with the second direction reaches the end point through transmission along the positioning wire. The transmission of the first positioning signal and the second positioning signal may not start from the current location of the robot.

In an embodiment, the two ends of the positioning wire are connected to the signal processor; and S11a includes the following operations:

determining the first time point at which the first positioning signal generated by the robot reaches the current location through transmission in the first direction along the positioning wire; determining the second time point at which the second positioning signal generated by the robot reaches the current location through transmission in the second direction along the positioning wire; determining a third time point at which the robot generates the first positioning signal; determining a fourth time point at which the robot generates the second positioning signal; and determining a time interval between the generation of the first positioning signal and the generation of the second positioning signal according to the third time point and the fourth time point.

In an application, in determining the first time point and the second time point, the first positioning signal and the second positioning signal are generated by the robot, particularly by the signal processor arranged in the robot. The signal processor is connected to the two ends of the positioning wire, the first direction may be from one end of the positioning wire to the current location of the robot, and the second direction may be from the other end of the positioning wire to the current location of the robot, i.e., the positioning wire and the signal processor are connected to form a circular shape or direction or irregular pattern surrounding the preset area, which is not limited in the present disclosure.

FIG. 2a is a first schematic diagram of a positioning signal transmission direction according to an embodiment of the present disclosure. As shown in FIG. 2a, for example, the robot is a lawn mower 10, and the signal processor is arranged in a base station 11.

S12 includes the following operation:

determining the distance between the current location and the signal processor based on the first time point, the second time point, the time interval, the signal transmission speed of the positioning wire, and the length of the positioning wire.

In an application, the time interval between the generation of the first positioning signal and the generation of the second positioning signal may be determined according to the third time point at which the first positioning signal is generated and the fourth time point at which the second positioning signal is generated, and the distance between the current location and the signal processor may be determined based on the first time point, the second time point, the time interval, the signal transmission speed of the positioning wire, and the length of the positioning wire.

In other words, the first positioning signal generated at the third time point is transmitted in the first direction and reaches the current location of the robot at the first time point, and the second positioning signal generated at the fourth time point is transmitted in the second direction and reaches the current location of the robot at the second time point, in which case the current location of the robot is the end point.

In an embodiment, the time interval is not less than a time required for the positioning signal to be transmitted from one end to the other end of the positioning wire along the positioning wire.

It should be noted that in this embodiment, the time interval between the generation of the first positioning signal and the generation of the second positioning signal is not less than the time required for the positioning signal to be transmitted from one end to the other end of the positioning wire along the positioning wire. For example, if the first positioning signal is generated first, it is necessary to ensure that the second positioning signal is generated after the first positioning signal is transmitted from one end of the positioning wire to the other end of the positioning wire, to avoid a case where when the robot is close to the other end of the positioning wire, the second positioning signal is received earlier than the first positioning signal, and it cannot be determined whether the signal received first is the first positioning signal or the second positioning signal, resulting in the inability to accurately position the robot. It should also be noted that the order in which the signal processor sends the first positioning signal and the second positioning signal may not be limited, i.e., the second positioning signal may be sent earlier than the first positioning signal, but the time interval between the generation of the first positioning signal and the generation of the second positioning signal needs to be longer than the time required for the first positioning signal or the second positioning signal to be transmitted from one end to the other end of the positioning wire.

In an embodiment, S12 includes the following operations:

determining that the first time point, the second time point, the time interval, the signal transmission speed, and the length of the positioning wire satisfy a first relationship below:

$$\begin{cases} |L1 - L2| = \left\| T2 - T1 \right| - \Delta T \right| * V \\ L1 + L2 = L \end{cases}$$

where L1 is a wire length over which the first positioning signal is transmitted on the positioning wire, L2 is a wire length over which the second positioning signal is transmitted on the positioning wire, T1 is the first time point, T2 is the second time point, $\Delta T$ is the time interval, V is the signal transmission speed, and L is the length of the positioning wire; and

calculating L1 and L2 based on the first relationship, determining relative distances between the current location and the signal processor in different directions based on L1 and L2, and determining the distance based on the relative distances.

In this embodiment, after the first time point, the second time point, the time interval, the signal transmission speed, and the length of the positioning wire are determined, L1 and L2 can be calculated according to the first relationship, relative distances between the current location and the signal processor in different directions can be determined based on L1 and L2, and the position of the current location on the positioning wire, i.e., the distance between the current location and the signal processor, can be determined based on the relative distances.

|L1-L2| is a distance difference between a transmission distance of the first positioning signal and a transmission distance of the second positioning signal, |T2- T1|-ΔT is a time difference between a transmission time of the first positioning signal and a transmission time of the second positioning signal, and the distance difference is equal to the time difference multiplied by the signal transmission speed.

In an embodiment, the two ends of the positioning wire are connected to the signal processor; and S11a includes the following operations:
determining the first time point at which the first positioning signal generated at the current location of the robot reaches the signal processor through transmission in the first direction along the positioning wire; and determining the second time point at which the second positioning signal generated at the current location of the robot reaches the signal processor through transmission in the second direction along the positioning wire.

In this embodiment, in determining the first time point and the second time point, the first positioning signal and the second positioning signal are generated by the robot, the signal processor is connected to the two ends of the positioning wire, the first direction may be from the current location of the robot to one end of the positioning wire, the second direction may be from the current location of the robot to the other end of the positioning wire, and the signal processor respectively receives the first positioning signal and the second positioning signal from the one end and the other end of the positioning wire.

In other words, the robot may generate the first positioning signal and the second positioning signal simultaneously or separately, the first positioning signal transmitted reaches the signal processor at the first time point, and the second positioning signal transmitted reaches the signal processor at the second time point. Since the signal processor is connected to the two ends of the positioning wire, the signal processor can determine whether a positioning signal received is the first positioning signal or the second positioning signal according to the end through which the positioning signal is received, thus accurately identify the positioning signal.

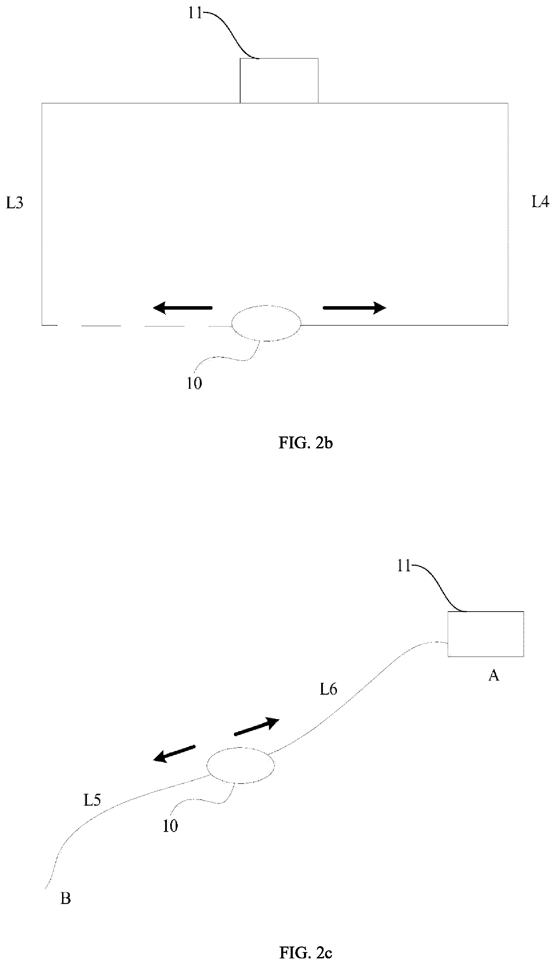

FIG. 2b is a second schematic diagram of a positioning signal transmission direction according to an embodiment of the present disclosure. As shown in FIG. 2b, for example, the robot is a lawn mower 10.

In an embodiment, S12 includes the following operations:

determining that the first time point, the second time point, the signal transmission speed, and the length of the positioning wire satisfy a second relationship:

$$\begin{cases} |L4 - L3| = |T4 - T3| * V \\ L3 + L4 = L \end{cases}$$

where L3 is a wire length over which the first positioning signal is transmitted on the positioning wire, L4 is a wire length over which the second positioning signal is transmitted on the positioning wire, T3 is the first time point, T4 is the second time point, V is the signal transmission speed, and L is the length of the positioning wire; and

calculating L3 and L4 based on the second relationship, determining relative distances between the current location of the robot and the signal processor in different directions based on L3 and L4, and determining the distance based on the relative distances.

In this embodiment, after the first time point, the second time point, the signal transmission speed, and the length of the positioning wire are determined, L3 and L4 can be calculated according to the second relationship, relative distances between the current location and the signal processor in different directions can be determined based on L3 and L4, and the position of the current location on the positioning wire, i.e., the distance between the current location and the signal processor, can be determined based on the relative distances.

|L4-L3| is a distance difference between a transmission distance of the first positioning signal and a transmission distance of the second positioning signal, |T4-T3| is a time difference between a transmission time of the first positioning signal and a transmission time of the second positioning signal, and the distance difference is equal to the time difference multiplied by the signal transmission speed.

In an embodiment, one end of the positioning wire is connected to the signal processor; and

S11a includes the following operations:
determining the first time point at which the first positioning signal generated at the current location of the robot reaches the signal processor through transmission in the first direction along the positioning wire; and determining the second time point at which the second positioning signal generated at the current location of the robot returns to the signal processor after being transmitted in the second direction along the positioning wire to the other end of the positioning wire.

In this embodiment, only one end of the positioning wire is connected to the signal processor; after the robot generates the first positioning signal, the first positioning signal is transmitted to the signal processor in the first direction along the positioning wire; after the robot generates the second positioning signal, the second positioning signal is transmitted to the other end of the positioning wire in the second direction along the positioning wire and then returns to the signal processor in the first direction.

In other words, the robot may simultaneously generate the first positioning signal and the second positioning signal, the first positioning signal reaches the signal processor at the first time point along the first direction, and the second positioning signal is first transmitted to the other end of the positioning wire in the second direction along the positioning wire, then propagates through the current location in the first direction along the positioning wire, and reaches the signal processor at the second time point. Alternatively, the robot first generates the first positioning signal and then generates the second positioning signal, or first generates the second positioning signal and then generates the first positioning signal. There is a time interval between the time point at which the first positioning signal is generated and the time point at which the second positioning signal is generated. Moreover, the time interval also needs to ensure that when the first positioning signal is generated first, the first positioning signal reaches the signal processor earlier than the second positioning signal, and when the second positioning signal is generated first, the second positioning signal reaches the signal processor earlier than the first positioning signal, so that the signal processor can distinguish whether the currently received positioning signal is the first positioning signal or the second positioning signal.

FIG. 2c is a third schematic diagram of a positioning signal transmission direction according to an embodiment of the present disclosure. As shown in FIG. 2c, for example, the robot is a lawn mower 10. Taking an end A of the positioning wire as one end and an end B of the positioning wire as the other end in FIG. 2c, the first positioning signal may be directly transmitted in the first direction from the current location of the robot to the end A of the positioning wire, i.e., to the signal processor, and the second positioning signal is first transmitted in the second direction to the end B of the positioning wire, and then transmitted backward in the first direction to the end A of the positioning wire.

In an embodiment, S12 includes the following operations:

determining that the first time point, the second time point, the signal transmission speed, and the length of the positioning wire satisfy a third relationship:

$$\begin{cases} 2L6 = |T6 - T5| * V \\ L5 + L6 = L \end{cases}$$

where L5 is a wire length over which the first positioning signal is transmitted on the positioning wire, L6 is a wire length over which the second positioning signal is transmitted on the positioning wire, T5 is the first time point, T6 is the second time point, V is the signal transmission speed, and L is the length of the positioning wire; and

calculating L5 and L6 based on the third relationship, determining relative distances between the current location and the signal processor in different directions based on L5 and L6, and determining the distance based on the relative distances.

In this embodiment, after the first time point, the second time point, the signal transmission speed, and the length of the positioning wire are determined, L5 and L6 can be calculated according to the third relationship, relative distances between the current location and the signal processor in different directions can be determined based on L5 and L6, and the position of the current location on the positioning wire, i.e., the distance between the current location and the signal processor, can be determined based on the relative distances.

2L6, which means two times the distance L6, is a transmission distance by which the second positioning signal travels when the second positioning signal is transmitted in the second direction along the positioning wire to the other end of the positioning wire and then returns to the signal processor, |T6-T5| is a time taken by the second positioning signal to pass through the transmission distance of 2*L6, and the transmission distance of 2*L6 is equal to the time multiplied by the signal transmission speed.

In an embodiment, one end of the positioning wire is connected to the signal processor; and S11 includes the following operations:

determining a first time point at which a positioning signal generated by the signal processor reaches the current location through transmission in a first direction through the positioning wire; and determining a second time point at which the positioning signal generated by the signal processor returns in a second direction to the current location after being transmitted in the first direction through the positioning wire to the other end of the positioning wire.

In this embodiment, only one end of the positioning wire is connected to the signal processor. After the signal processor generates the positioning signal, the positioning signal is first transmitted in the first direction along the positioning wire to the robot, and then the positioning signal is transmitted in the first direction along the positioning wire to the other end of the positioning wire and then returns to the current location.

It should be noted that in the present disclosure, the first direction may be from one end to the other end of the positioning wire, and the second direction may be from the other end to one end of the positioning wire.

In other words, after the signal processor generates the positioning signal, the positioning signal is transmitted starting from one end of the positioning wire, the positioning signal is first transmitted in the first direction from one end of the positioning wire, and the positioning signal reaches the current location of the robot at the first time point. The positioning signal continues to be transmitted on the positioning wire. After reaching the other end of the positioning wire, the positioning signal is transmitted backward in the second direction along the positioning wire, and reaches the current location of the robot again at the second time point.

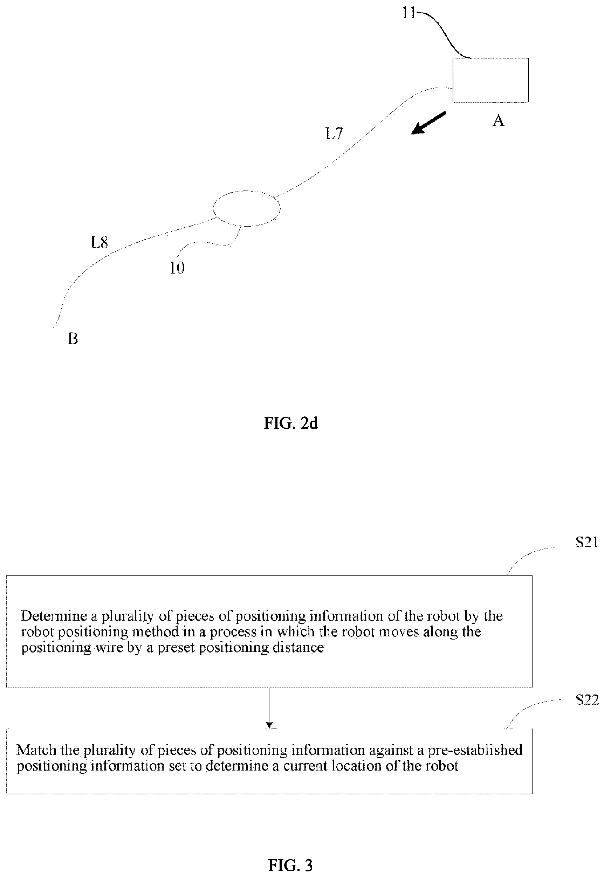

FIG. 2d is a fourth schematic diagram of a positioning signal transmission direction according to an embodiment of the present disclosure. As shown in FIG. 2d, for example, the robot is a lawn mower 10, and the signal processor is arranged in a base station 11. In FIG. 2c and FIG. 2d, a positioning wire which is spread out is schematically shown as an example, but in practice, the positioning wire may still be arranged surrounding the preset area. Taking an end A of the positioning wire as one end and an end B of the positioning wire as the other end in FIG. 2d, the positioning signal is transmitted in the first direction from the base station, i.e., from the end A of the positioning wire, reaches the current location of the robot at the first time point, then continues to be transmitted along the positioning wire to the end B of the positioning wire, and then is transmitted backward in the second direction and reaches the current location of the robot at the second time point.

In an embodiment, determining a distance between the current location and the signal processor based on the first time point, the second time point, a signal transmission speed of the positioning wire, and a length of the positioning wire includes:

determining that the first time point, the second time point, the signal transmission speed, and the length of the positioning wire satisfy a fourth relationship below:

$$\begin{cases} 2L8 = |T8 - T7| * V \\ L7 + L8 = L \end{cases}$$

where L7 is a wire length from the signal processor to the current location, L8 is a length from the other end of the positioning wire to the current location, T7 is the first time point, T8 is the second time point, V is the signal transmission speed, and L is the length of the positioning wire; and

calculating L7 according to the fourth relationship, and determining the distance between the current location and the signal processor based on L7.

In this embodiment, after the first time point, the second time point, the signal transmission speed, and the length of the positioning wire are determined, L7 and L8 can be calculated according to the fourth relationship, and the distance between the current location and the signal processor can be determined based on L7 and L8.

2L8, which means two times the distance L8, is a transmission distance of the positioning signal between the robot and the other end, |T8-T7| is a time taken by the positioning signal to pass through the transmission distance of 2*L8, and the transmission distance of 2*L8 is equal to the time multiplied by the signal transmission speed.

In an embodiment, the positioning wire is configured for transmitting a boundary signal; and S11 includes the following operation:

when the robot detects the boundary signal of the positioning wire and detects that the boundary signal is greater than a preset signal threshold, determining the first time point and the second time point at which the positioning signals with the different directions reach the end point through transmission along the positioning wire according to the current location of the robot.

In this embodiment, it is determined whether the robot is close to the positioning wire by determining whether the boundary signal is greater than a preset signal threshold, thereby avoiding erroneous judgment leading to positioning errors.

In an embodiment, the method further includes: transmitting the boundary signal to the positioning wire in real time or transmitting the boundary signal to the positioning wire at a preset frequency.

In this embodiment, one positioning wire may be provided, and the boundary signal is transmitted to the positioning wire in real time or according to a preset frequency, so that the robot can receive the boundary signal and perform positioning.

The signal frequency of the boundary signal may be different from that of the positioning signal, to avoid mutual interference between the signals.

In an embodiment, the positioning wire includes a first positioning wire and a second positioning wire, and the method further includes:

transmitting the boundary signal to the first positioning wire in real time or transmitting the boundary signal to the positioning wire at a preset frequency; and

S11 includes the following operation:

determining, after the robot detects the boundary signal of the first positioning wire, the first time point and the second time point at which the positioning signals with the different directions reach the end point through transmission along the second positioning wire according to the current location of the robot.

In an application, after detecting the boundary signal of the first positioning wire, the signal processor generates a first positioning signal with a first direction and a second positioning signal with a second direction, and then respectively determines a first time point at which the first positioning signal reaches the end point through transmission along the positioning wire and a second time point at which the second positioning signal reaches the end point through transmission along the positioning wire.

In this embodiment, two positioning wires may be provided, one for transmitting the boundary signal and the other for transmitting the positioning signal, to avoid signal interference.

In an embodiment, determining, after the robot walks in the preset area and detects the positioning wire, a first time point and a second time point at which positioning signals with different directions reach an end point through transmission along the positioning wire according to a current location of the robot includes:

determining, after detecting the positioning wire and sending an instruction to the signal processor to instruct the signal processor and the robot to enter a positioning detection state, the first time point and the second time point at which the positioning signals with the different directions reach the end point through transmission along the positioning wire according to the current location of the robot.

In this embodiment, after detecting the positioning wire, the robot sends an instruction to the signal processor to cause the signal processor and the robot to enter the positioning detection state, so that the signal processor or the robot outputs a positioning signal.

In a case where the signal processor is arranged in the base station, after the signal processor receives the instruction, the signal processor enters the positioning detection state and outputs the positioning signal.

In a case where the signal processor is arranged in the robot, after the signal processor receives the instruction, the robot enters the positioning detection state and outputs the positioning signal.

In an embodiment, determining, after detecting the positioning wire and sending an instruction to the signal processor to instruct the signal processor and the robot to enter a positioning detection state, the first time point and the second time point at which the positioning signals with the different directions reach the end point through transmission along the positioning wire according to the current location of the robot includes:

determining, after the robot detects the positioning wire and sends an instruction to the signal processor to instruct the signal processor or the robot to generate the positioning signal and turn on a timer, the first time point and the second time point at which the positioning signals with the different directions reach the end point through transmission along the positioning wire according to the current location of the robot.

In this embodiment, after the signal processor or the robot generates the positioning signal and turns on the timer, the first time point and the second time point at which the positioning signals with the different directions reach the end point through transmission along the positioning wire can be determined according to the current location of the robot, thereby achieving accurate timing.

FIG. 3 is a second schematic flowchart of a robot positioning method according to an embodiment of the present disclosure. A positioning wire is arranged in a preset area in which a robot walks, and the positioning wire is configured to transmit a positioning signal. The method includes the following steps S21 to S22.

At S21, a plurality of pieces of positioning information of the robot are determined by the method of any one of the embodiments in a process in which the robot moves along the positioning wire by a preset positioning distance,

where the preset positioning distance is not less than a working distance of the robot.

It is determined whether a distance by which the robot moves is equal to the preset positioning distance. If the distance by which the robot moves is equal to the preset positioning distance, indicating that the robot has moved by the preset positioning distance, S22 is executed. If the distance by which the robot moves is not equal to the preset positioning distance, indicating that the robot has not moved by the preset positioning distance, the robot is controlled to continue to move along the positioning wire.

In a possible implementation, a speed of the robot moving along the positioning wire is less than a speed of the robot not moving along the positioning wire, so that a more accurate positioning signal is acquired.

At S22, the plurality of pieces of positioning information are matched against a pre-established positioning information set to determine a current location of the robot.

In an application, a plurality of pieces of positioning information are matched against a pre-established positioning information set to obtain a corresponding plurality of consecutive locations. In an embodiment, latest positioning information acquired is determined as the current location of the robot.

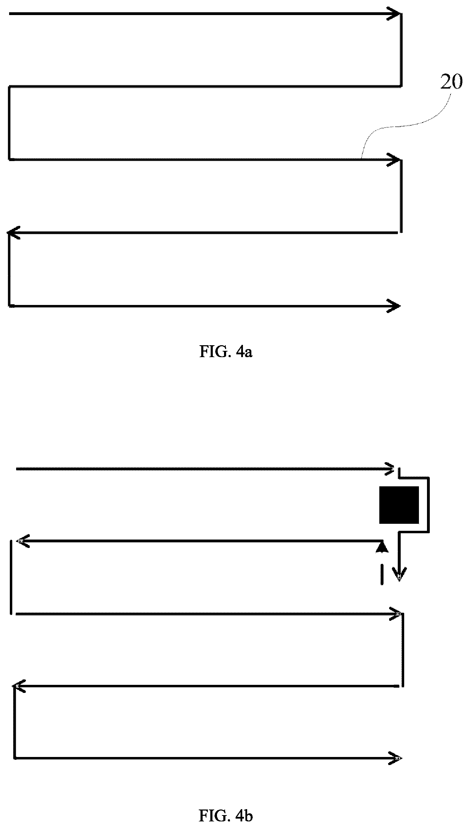

For example, the robot is a lawn mower, an area within which the lawn mower moves is an area to be mowed, and the lawn mower executes a mowing task in the area to be mowed. FIG. 4a is a first example diagram of positioning according to an embodiment of the present disclosure. As shown in FIG. 4a, a solid line 20 with arrows shows a mowing path along which the lawn mower executes the mowing task, and directions of the arrows show the moving direction of the lawn mower.

When the lawn mower moves along the positioning wire following the mowing path, a positioning signal is acquired. When a distance by which the lawn mower moves is equal to the preset positioning distance, a plurality of pieces of positioning information of the lawn mower are determined according to a plurality of positioning signals, and the plurality of pieces of positioning information are matched against a pre-established positioning information set to determine the current location of the lawn mower. When it is determined that a point at which the lawn mower is located is a turning point of the mowing path, the lawn mower is controlled to enter the area to be mowed according to the mowing path for mowing. After reaching the positioning wire at the opposite end according to the mowing path, the lawn mower continues to move along the positioning wire. When a distance by which the lawn mower moves is equal to the preset positioning distance, a plurality of pieces of positioning information of the lawn mower are determined according to a plurality of positioning signals, and the plurality of pieces of positioning information are matched against a pre-established positioning information set to determine the current location of the lawn mower. When it is determined that the current location of the lawn mower is a turning point of the mowing path, the lawn mower is controlled to enter the area to be mowed according to the mowing path for mowing.

When the lawn mower executes the mowing task, accurate positioning is performed using the pre-established positioning information set based on a plurality of pieces of positioning information determined according to a plurality of positioning signals, to obtain an accurate location of the lawn mower. As such, the lawn mower can better mow through the area to be mowed without missing any spots.

In the embodiments of the present disclosure, a plurality of pieces of positioning information are acquired in the process of the robot moving along the positioning wire by the preset positioning distance, the plurality of pieces of positioning information are matched against the pre-established positioning information set to determine the current location of the robot. As such, the current location of the robot can be determined according to the plurality of pieces of positioning information and the pre-established positioning information set, thereby improving positioning accuracy.

In an embodiment, S21 includes the following operations:
in case of presence of an obstacle that blocks the movement of the robot in the process of the robot moving along the positioning wire, controlling the robot to bypass the obstacle; and after the robot has bypassed the obstacle, controlling the robot to continue to move along the positioning wire, so that a distance by which the robot moves along the positioning wire reaches the preset positioning distance.

In an application, when the movement of the robot along the positioning wire is blocked by an obstacle, the robot needs to bypass the obstacle to continue to move. Because the robot cannot move along the positioning wire in the process of bypassing the obstacle, the robot cannot acquire any positioning signal while bypassing the obstacle. Therefore, after the robot bypasses the obstacle, the robot needs to be controlled to continue to move along the positioning wire by the preset positioning distance, and acquire a plurality of positioning signals, thus realizing the acquisition of a plurality of positioning signals collected during the movement of the robot by the preset positioning distance.

After the distance by which the robot moves along the positioning wire reaches the preset positioning distance, the method further includes:
controlling the robot to move backward or turn around and then advance to a preset location point on a planned path; controlling the robot to turn to a fourth direction at the preset location point; and controlling the robot to move in the fourth direction.

In an application, because the robot moves by the preset positioning distance after bypassing the obstacle, the current location of the robot may not be at a preset location point on the planned path. Generally, the current location of the robot is located ahead of the preset location point. To enable the robot to move along the planned path, the robot is controlled to move backward or turn around and then advance to the preset location point on the planned path, then the robot is controlled to turn to the fourth direction at the preset location point, and the robot is controlled to move in the fourth direction. The fourth direction is a moving direction toward the area to be mowed.

For example, the robot is a lawn mower, an area within which the lawn mower moves is an area to be mowed, and the lawn mower executes a mowing task in the area to be mowed. FIG. 4b is a second example diagram of positioning according to an embodiment of the present disclosure. As shown in FIG. 4b, a solid line with arrows shows a mowing path along which the lawn mower executes the mowing task, directions of the arrows show the moving direction of the lawn mower, and an obstacle, which is denoted by a solid block, is present on the positioning wire. The lawn mower encounters an obstacle when moving along the positioning wire. After the lawn mower is controlled to bypass the obstacle, the lawn mower is further controlled to continue to move along the positioning wire by the preset positioning distance, and acquire a plurality of positioning signals. A plurality of pieces of positioning information of the lawn mower are determined according to the plurality of positioning signals, and the plurality of pieces of positioning information are matched against a pre-established positioning information set to determine the current location of the lawn mower. Because the lawn mower further moves by the preset positioning distance after bypassing the obstacle, the moving distance of the lawn mower is longer than a distance by which the lawn mower is expected to move on the positioning wire along the mowing path, and the lawn mower needs to be controlled to move backward or turn around and advance to the preset location point. A dashed line with an arrow in the figure denotes a path along which the lawn mower moves backward or turns around and advances to the preset location point. Then, the lawn mower is controlled to turn to the fourth direction at the preset location point, the lawn mower is controlled to move in the fourth direction, and then the lawn mower is controlled to mow along the planned path.

In the embodiments of the present disclosure, when there is an obstacle on the positioning wire, the robot is controlled to bypass the obstacle, and after the robot bypasses the obstacle, the robot is controlled to continue to move along the positioning wire by the preset positioning distance, and acquire a plurality of positioning signals. A plurality of pieces of positioning information of the robot are determined according to the plurality of positioning signals, and the plurality of pieces of positioning information are matched against a pre-established positioning information set to determine the current location of the robot. As such, the robot can be accurately positioned when there is an obstacle on the positioning wire. In addition, the robot is controlled to move backward or turn around and then advance to the preset location point on the planned path, and the robot is controlled to turn to the fourth direction at the preset location point. This ensures that the robot can travel according to the planned path after bypassing the obstacle.

In an embodiment, after the distance by which the robot moves along the positioning wire reaches the preset positioning distance, the method further includes: controlling the robot to turn to a fourth direction; controlling the robot to move in the fourth direction; determining whether the robot has moved onto the positioning wire; and when determining that the robot has moved onto the positioning wire, controlling the robot to turn and move in a fifth direction by a first distance, where the fifth direction is opposite to the third direction, and the first distance is a distance projected in the third direction or the fifth direction when the robot is controlled to follow an edge of the obstacle.

In an application, because the current location of the robot may not be at a preset location point on the planned path after the robot bypasses the obstacle, the traveling path of the robot needs to be adjusted. To enable the robot to move along the planned path, after the robot is controlled to move in the fourth direction and move onto the positioning wire, the robot is controlled to turn and move in the fifth direction by the first distance, so that the robot is located on the planned path.

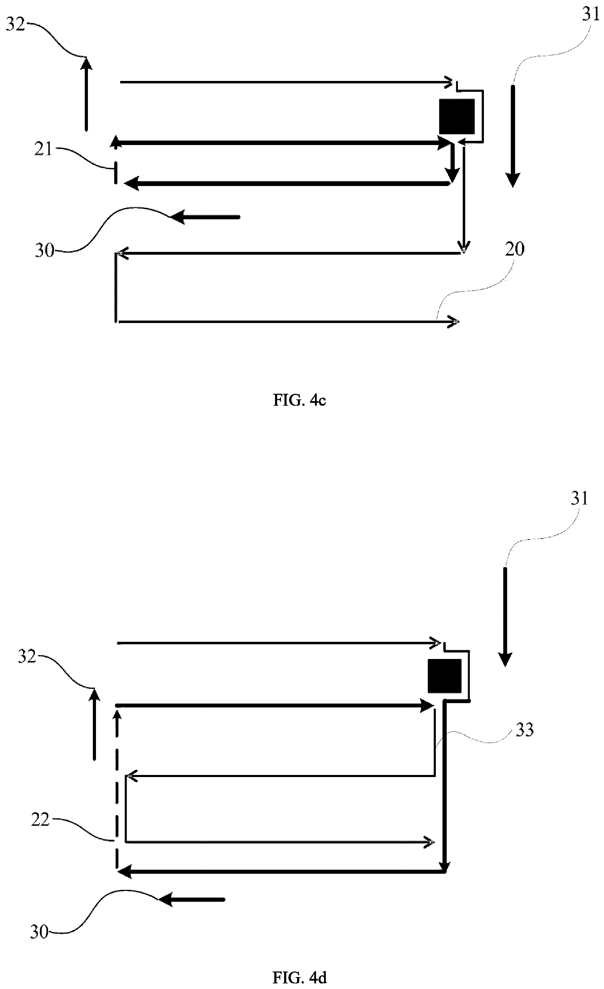

FIG. 4c is a third example diagram of positioning according to an embodiment of the present disclosure. As shown in FIG. 4c, a solid line with arrows shows a mowing path along which the lawn mower executes the mowing task, directions of the arrows show the moving direction of the lawn mower, and an obstacle, which is denoted by a solid block, is present on the positioning wire. When the lawn mower encounters the obstacle while moving along the positioning wire, the lawn mower is controlled to bypass the obstacle in the third direction 31, in which case the lawn mower moves by the first distance. Then, the lawn mower is further controlled to move along the positioning wire by the preset positioning distance, and acquire a plurality of positioning signals. A plurality of pieces of positioning information of the lawn mower are determined according to the plurality of positioning signals, and the plurality of pieces of positioning information are matched against a pre-established positioning information set to determine the current location of the lawn mower.

Then, the lawn mower is controlled to turn to the fourth direction 30, and the lawn mower is controlled to move in the fourth direction and enter the area to be mowed. When the lawn mower reaches the positioning wire, because the lawn mower has moved in the third direction 31 by the first distance to bypass the obstacle, the lawn mower is controlled to move in the fifth direction 32 by the first distance, so that the lawn mower is located on the planned path. A dashed line 21 with an arrow in the figure denotes a path along which the lawn mower moves in the fifth direction by the first distance. Then, the lawn mower is controlled to enter the area to be mowed, and when reaching the positioning wire, the lawn mower is controlled to move in the third direction 31 along the positioning wire by the first working distance and then turn to the fourth direction 30 and enter the area to be mowed. When the lawn mower reaches the positioning wire again, the lawn mower is further controlled to move in the third direction 31 along the positioning wire by the first working distance, and then the lawn mower is controlled to turn and enter the area to be mowed. The rest can be deduced by analogy.

In this embodiment, after the robot is controlled to continue to move along the positioning wire by the preset positioning distance, the robot is controlled to move in the fourth direction, and after the robot moves onto the positioning wire, the robot is controlled to turn and move in the fifth direction by the first distance. The first distance is a distance projected in the third direction or the fifth direction when the robot is controlled to follow an edge of the obstacle. This ensures that the robot can travel according to the planned path after bypassing the obstacle.

In an embodiment, after the distance by which the robot moves along the positioning wire reaches the preset positioning distance, the method further includes:

controlling the robot to turn to a fourth direction; controlling the robot to move in the fourth direction; determining whether the robot has moved onto the positioning wire; and when determining that the robot has moved onto the positioning wire, controlling the robot to turn and move in a fifth direction by a second distance; and controlling the robot to perform a mowing operation according to the first working distance or a second working distance,

where the fifth direction is opposite to the third direction, and the second distance is determined by a distance projected in the third direction or the fifth direction when the robot is controlled to follow an edge of the obstacle, the preset positioning distance, and a first working distance. The second working distance is determined by the second distance. The second working distance is less than and close to the first working distance.

The second distance is calculated using the following formula: second distance = distance in the third direction or fifth direction + (preset positioning distance - first working distance). The second working distance is calculated using the following formula: second working distance = second distance / N, where N is a positive number.

In an application, because the current location of the robot may not be at a preset location point on the planned path after the robot bypasses the obstacle, the traveling path of the robot needs to be adjusted. To enable the robot to move along the planned path, after the robot is controlled to move in the fourth direction and move onto the positioning wire, the robot is controlled to turn and move in the fifth direction by the second distance, so that the robot is located on the planned path. Then, the robot is controlled to perform a mowing operation according to the first working distance or the second working distance. This ensures that the robot can execute the mowing task.

FIG. 4d is a fourth example diagram of positioning according to an embodiment of the present disclosure. As shown in FIG. 4d, a solid line with arrows shows a mowing path along which the lawn mower executes the mowing task, directions of the arrows show the moving direction of the lawn mower, and an obstacle, which is denoted by a solid block, is present on the positioning wire. When the lawn mower encounters the obstacle while moving along the positioning wire, the lawn mower is controlled to bypass the obstacle in the third direction 31, in which case the lawn mower moves by the first distance. Then, the lawn mower is further controlled to move along the positioning wire by the preset positioning distance, and acquire a plurality of positioning signals. A plurality of pieces of positioning information of the lawn mower are determined according to the plurality of positioning signals, and the plurality of pieces of positioning information are matched against a pre-established positioning information set to determine the current location of the lawn mower.

Then, the lawn mower is controlled to move by three working distances and turn to the fourth direction, and the lawn mower is controlled to move in the fourth direction 30 and enter the area to be mowed. When the lawn mower reaches the positioning wire, because the lawn mower has moved by three working distances after bypassing the obstacle in the third direction 31, i.e., the lawn mower has moved by the second distance in total, the lawn mower is controlled to move in the fifth direction 32 by the second distance, so that the lawn mower is located on the planned path. A dashed line 22 with an arrow in the figure denotes a path along which the lawn mower moves in the fifth direction 32 by the second distance. Then, the lawn mower is controlled to enter the area to be mowed, and when reaching the positioning wire, the lawn mower is controlled to move in the third direction 31 along the positioning wire by the second working distance 33 and then turn to the fourth direction 30 and enter the area to be mowed. The second working distance in this figure is obtained by unequally dividing the second distance.

Then, when the lawn mower reaches the positioning wire again, the lawn mower is further controlled to move in the third direction 31 along the positioning wire by the second working distance 33, and then the lawn mower is controlled to turn and enter the area to be mowed. The rest can be deduced by analogy.

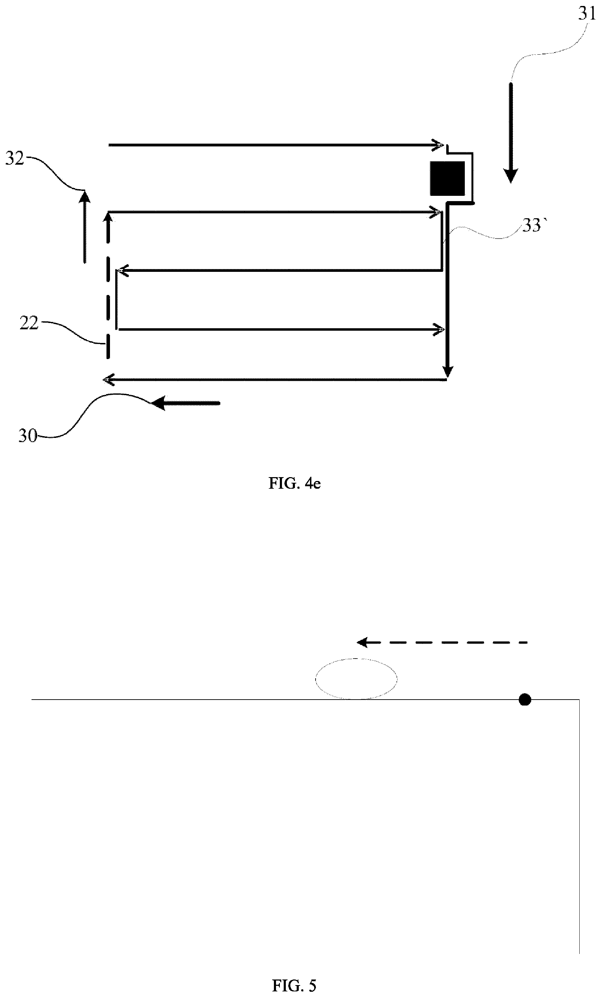

FIG. 4e is a fifth example diagram of positioning according to an embodiment of the present disclosure. As shown in FIG. 4e, a solid line with arrows shows a mowing path along which the lawn mower executes the mowing task, directions of the arrows show the moving direction of the lawn mower, and an obstacle, which is denoted by a solid block, is present on the positioning wire. When the lawn mower encounters the obstacle while moving along the positioning wire, the lawn mower is controlled to bypass the obstacle in the third direction 31, in which case the lawn mower moves by the first distance. Then, the lawn mower is further controlled to move along the positioning wire by the preset positioning distance, and acquire a plurality of positioning signals. A plurality of pieces of positioning information of the lawn mower are determined according to the plurality of positioning signals, and the plurality of pieces of positioning information are matched against a pre-established positioning information set to determine the current location of the lawn mower.

Then, the lawn mower is controlled to move by three working distances and turn to the fourth direction, and the lawn mower is controlled to move in the fourth direction 30 and enter the area to be mowed. When the lawn mower reaches the positioning wire, because the lawn mower has moved by three working distances after bypassing the obstacle in the third direction 31, i.e., the lawn mower has moved by the second distance in total, the lawn mower is controlled to move in the fifth direction 32 by the second distance, so that the lawn mower is located on the planned path. A dashed line 22 with an arrow in the figure denotes a path along which the lawn mower moves in the fifth direction 32 by the second distance. Then, the lawn mower is controlled to enter the area to be mowed, and when reaching the positioning wire, the lawn mower is controlled to move in the third direction 31 along the positioning wire by the second working distance 33 and then turn to the fourth direction 30 and enter the area to be mowed. The second working distance in this figure is obtained by dividing the second distance into three equal parts. Then, when the lawn mower reaches the positioning wire again, the lawn mower is further controlled to move in the third direction 31 along the positioning wire by the second working distance 33, and then the lawn mower is controlled to turn and enter the area to be mowed. The rest can be deduced by analogy.

In this embodiment, after the robot is controlled to continue to move along the positioning wire by the preset positioning distance, the robot is controlled to move in the fourth direction, and after the robot moves onto the positioning wire again, the robot is controlled to turn and move in the fifth direction by the second distance. The second distance is determined by a distance projected in the third direction or the fifth direction when the robot is controlled to follow an edge of the obstacle, the preset positioning distance, and a first working distance. This ensures that the robot can travel according to the planned path after bypassing the obstacle.

In an embodiment, a method for obtaining the pre-established positioning information set before controlling the robot to move along the positioning wire by the preset positioning distance includes:

controlling the robot to move over the positioning wire at least one circle, and acquiring positioning signals of different locations during the movement; and

acquiring a plurality of pieces of positioning information of the robot according to the positioning signals, and determining the plurality of pieces of positioning information as the pre-established positioning information set.

In an application, in the process of the robot moving over the positioning wire at least one circle, a cutter head of the robot is controlled not to operate, thus reducing the impact of vibration on signal acquisition.

A distance between two adjacent locations is less than a working distance of the robot.

In a possible implementation, each location is determined using a position sensor (e.g., a gyroscope, an odometer, etc.), and a positioning signal is acquired at each location.

The location may be expressed as a distance from a charging base station. For example, the working distance is 0.3 m, the distance between two adjacent positions is 0.1 m, and the location is expressed as 0 m away from the charging base station, 0.1 m away from the charging base station, 0.2 m away from the charging base station, etc.

For example, the robot moves along the positioning wire. The robot acquires positioning information at a previous location. Then, the robot moves by one working distance to the current location, and acquires positioning information at the current location. Similarly, positioning information corresponding to each location is obtained.

After the robot moves over the positioning wire at least one circle, a positioning information set is established according to the plurality of pieces of positioning information.

In an embodiment, in the process of controlling the robot to move over the positioning wire at least one circle, the method includes:
determining whether the robot has reached an edge-following closure point; and when determining that the robot has reached the edge-following closure point, controlling the robot to continue to move along the positioning wire by the preset positioning distance.

The edge-following closure point coincides with a starting point of movement of the robot.

FIG. 5 is a sixth example diagram of robot positioning according to an embodiment of the present disclosure. As shown in FIG. 5, a solid point in the figure denotes the edge-following closure point. An ellipse in the figure denotes the robot. After the robot reaches the edge-following closure point, the robot is controlled to continue to move along the positioning wire by the preset positioning distance, to ensure that the edge following has been completed.

In the embodiments of the present disclosure, the robot is controlled to move over the positioning wire at least one circle, and positioning signals of different locations are acquired during the movement; and a plurality of pieces of positioning information of the robot are acquired according to the positioning signals, and the plurality of pieces of positioning information are determined as the pre-established positioning information set. To ensure that the positioning information set has been established, whether the robot reaches the edge-following closure point needs to be detected in real time during the process of controlling the robot to move along the positioning wire. If the robot reaches the edge-following closure point, it is necessary to control the robot to continue to move along the positioning wire by the preset positioning distance, and then determine again whether the edge following has been completed. If the edge following has been completed, indicating that the positioning information set has been established, the robot can perform subsequent operations. This ensures that the robot can obtain a complete positioning information set, providing sufficient matching information for subsequent positioning.

In an embodiment, in the process of controlling the robot to move over the positioning wire at least one circle, the method includes:
adjusting a frequency at which the robot determines location points on the positioning wire according to a bending curvature of the positioning wire, a walking speed of the robot, and a pose change speed of the robot, to determine pose data of the robot when the robot is at the location points on the positioning wire.

In this embodiment, the frequency at which the robot determines location points on the positioning wire may be adjusted according to the bending curvature of the positioning wire, the walking speed of the robot, and the pose change speed of the robot. For example, in a part of the positioning wire with a large bending curvature, the pose data of the robot changes greatly, and the robot may be controlled to increase the frequency of determining location points, to determine pose data when the robot is at the location points on the positioning wire. When the walking speed of the robot is fast, the frequency of determining location points may also be increased. When the pose change speed of the robot is fast, the frequency of determining location points may also be increased. The higher the frequency of determining location points, the more location points are obtained during movement by a preset distance, and the more complete positioning information set can be obtained, allowing for accurate matching of a plurality of pieces of positioning information obtained subsequently against the positioning information set, thereby improving the positioning accuracy.

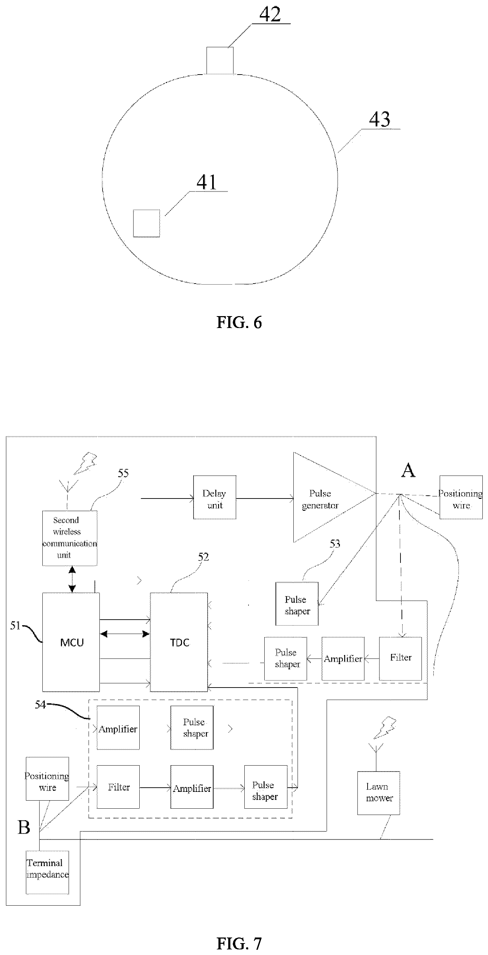

FIG. 6 is a schematic structural diagram of a robot positioning system according to an embodiment of the present disclosure. The system includes:

a robot 41, configured for executing a program to implement the steps of the above method;

a signal processor 42, configured for recharging of the robot; and

a positioning wire 43, configured for connecting to the signal processor and defining a preset area together with the signal processor.

For details of the robot positioning system provided in the present disclosure, reference can be made to the above method embodiments, and the details will not be repeated herein.

The present disclosure further provides a computer-readable storage medium having a computer program stored therein. The computer program, when executed by a robot, causes the robot to implement the steps of the above method.

FIG. 7 is a schematic structural diagram of a signal processor according to embodiment of the present disclosure. The signal processor includes a micro control unit (MCU) 51, a timer 52, a first signal acquisition circuit 53, and a second signal acquisition circuit 54.

The first signal acquisition circuit 53 is connected between the timer 52 and one end of the positioning wire. The second signal acquisition circuit 54 is connected between the timer 52 and the other end of the positioning wire. The MCU 51 is connected to the timer 52 and is electrically connected to the two ends of the positioning wire.

The MCU 51 is configured for triggering the timer 52 to turn on when a robot is electrically connected to the positioning wire.

The first signal acquisition circuit 53 is configured for acquiring a first positioning signal sent by the robot to the signal processor in a first direction along the positioning wire, performing first processing on the first positioning signal, and sending the processed first positioning signal to the timer 52 to trigger the timer 52 to record a first time point at which the signal processor receives the first positioning signal.

The second signal acquisition circuit 54 is configured for acquiring a second positioning signal sent by the robot to the signal processor in a second direction along the positioning wire, performing second processing on the second positioning signal, and sending the processed second positioning signal to the timer 52 to trigger the timer 52 to record a second time point at which the signal processor receives the second positioning signal.

In an embodiment, the robot includes a first wireless communication unit, and the signal processor further includes a second wireless communication unit 55.

The first wireless communication unit is configured for sending an instruction to the second wireless communication unit after the robot detects a boundary signal of the positioning wire.

The second wireless communication unit 55 is configured for receiving the instruction and sending the instruction to the MCU 51, to cause the MCU 51 to trigger the timer 52 to turn on.

In FIG. 7, TDC denotes the timer, START denotes a signal that the MCU 51 sends to trigger the TDC to start timing, and STOP1 and STOP2 each denote a triggering time point at which one end of the signal processor connected to the positioning wire receives a positioning signal. The first signal acquisition circuit 53 may include, but is not limited to, a pulse shaper, an amplifier, and a filter. The second signal acquisition circuit 54 may also include, but is not limited to, an amplifier, a pulse shaper, and a filter. The MCU 51 may control a pulse generator to output a positioning signal to the positioning wire after a delay through the delay unit.

In an embodiment, a robot is provided, including:

a memory, configured for storing a computer program; and

a processor, configured for executing the computer program, where the computer program, when executed by the processor, causes the processor to implement the robot positioning method of any one of the embodiments.

For details of the robot provided in the present disclosure, reference can be made to the above method embodiments, and the details will not be repeated herein.

For details of the computer-readable storage medium provided in the present disclosure, reference can be made to the above method embodiments, and the details will not be repeated herein.

The foregoing descriptions are merely optional embodiments of the present disclosure, and are not intended to limit the present disclosure. To those having ordinary skills in the art, various modifications and variations may be made to the present disclosure. Any modifications, equivalent replacements, and improvements made within the protection scope and principle of the present disclosure shall fall within the scope of the appended claims of the present disclosure.

**Claims**

1. A robot positioning method, wherein a positioning wire is arranged in a preset area in which a robot walks, and at least one of two ends of the positioning wire is connected to a signal processor, the method comprises:

    determining, in response to the robot detecting a boundary signal of the positioning wire, a first time point and a second time point at which positioning signals with different directions reach an end point through transmission along the positioning wire according to a current location of the robot;
    determining a distance between the current location and the signal processor based on the first time point, the second time point, a signal transmission speed of the positioning wire and a length of the positioning wire; and
    determining positioning information of the robot based on the distance.

2. The robot positioning method of claim 1, wherein the determining a first time point and a second time point at which positioning signals with different directions reach an end point through transmission along the positioning wire according to a current location of the robot comprises:

    determining the first time point at which a first positioning signal with a first direction generated by the robot at the current location reaches the end point through transmission along the positioning wire and the second time point at which a second positioning signal with a second direction generated by the robot at the current location reaches the end point through transmission along the positioning wire; or
    determining the first time point at which a first positioning signal generated by a base station reaches the current location of the robot through transmission in a first direction along the positioning wire and the second time point at which a second positioning signal generated by the base station reaches the current location of the robot through transmission in a second direction along the positioning wire, wherein a location of the base station is a location of the end point.

3. The robot positioning method of claim 2, wherein the two ends of the positioning wire are connected to the signal processor; and
the determining the first time point at which a first positioning signal with a first direction generated by the robot at the current location reaches the end point through transmission along the positioning wire and the second time point at which a second positioning signal with a second direction generated by the robot at the current location reaches the end point through transmission along the positioning wire comprises:

    determining the first time point at which the first positioning signal generated by the robot reaches the base station through transmission in the first direction along the positioning wire; and
    determining the second time point at which the second positioning signal generated by the robot reaches the base station through transmission in the second direction along the positioning wire.

4. The robot positioning method of claim 3, further comprising:

    determining a third time point at which the robot generates the first positioning signal;
    determining a fourth time point at which the robot generates the second positioning signal; and
    determining a time interval between the generation of the first positioning signal and the generation of the second positioning signal according to the third time point and the fourth time point; and
    the determining a distance between the current location and the signal processor based on the first time point, the second time point, a signal transmission speed of the positioning wire, and a length of the positioning wire comprises:
    determining the distance between the current location and the signal processor based on the first time point, the second time point, the time interval, the signal transmission speed of the positioning wire, and the length of the positioning wire.

5. The robot positioning method of claim 4, wherein the time interval is not less than a time required for the positioning signal to be transmitted from one end to another end of the positioning wire along the positioning wire.

6. The robot positioning method of claim 4 or 5, wherein the determining the distance between the current location and the signal processor based on the first time point, the second time point, the time interval, the signal transmission speed of the positioning wire, and the length of the positioning wire comprises:

determining that the first time point, the second time point, the time interval, the signal transmission speed, and the length of the positioning wire satisfy a first relationship below:

$$\begin{cases} \left| L1 - L2 \right| = \left\| T2 - T1 \right| - \Delta T \right| * V \\ L1 + L2 = L \end{cases}$$

wherein L1 is a wire length over which the first positioning signal is transmitted on the positioning wire, L2 is a wire length over which the second positioning signal is transmitted on the positioning wire, T1 is the first time point, T2 is the second time point, $\Delta T$ is the time interval, V is the signal transmission speed, and L is the length of the positioning wire; and calculating L1 and L2 based on the first relationship, determining relative distances between the current location and the signal processor in different directions based on L1 and L2, and determining the distance based on the relative distances.

7. The robot positioning method of claim 2, wherein the two ends of the positioning wire are connected to the signal processor; and the determining the first time point at which a first positioning signal with a first direction generated by the robot at the current location reaches the end point through transmission along the positioning wire and the second time point at which a second positioning signal with a second direction generated by the robot at the current location reaches the end point through transmission along the positioning wire comprises:

determining the first time point at which the first positioning signal generated by the robot at the current location reaches the signal processor through transmission in the first direction along the positioning wire; and determining the second time point at which the second positioning signal generated by the robot at the current location reaches the signal processor through transmission in the second direction along the positioning wire.

8. The robot positioning method of claim 7, wherein the determining a distance between the current location and the signal processor based on the first time point, the second time point, a signal transmission speed of the positioning wire, and a length of the positioning wire comprises:

determining that the first time point, the second time point, the signal transmission speed, and the length of the positioning wire satisfy a second relationship:

$$\begin{cases} \left| L4 - L3 \right| = \left| T4 - T3 \right| * V \\ L3 + L4 = L \end{cases}$$

wherein L3 is a wire length over which the first positioning signal is transmitted on the positioning wire, L4 is a wire length over which the second positioning signal is transmitted on the positioning wire, T3 is the first time point, T4 is the second time point, V is the signal transmission speed, and L is the length of the positioning wire; and calculating L3 and L4 based on the second relationship, determining relative distances between the current location and the signal processor in different directions based on L3 and L4, and determining the distance based on the relative distances.

9. The robot positioning method of claim 2, wherein one end of the positioning wire is connected to the signal processor; and the determining the first time point at which a first positioning signal with a first direction generated by the robot at the current location reaches the end point through transmission along the positioning wire and the second time point at which a second positioning signal with a second direction generated by the robot at the current location reaches the end point through transmission along the positioning wire comprises:

determining the first time point at which the first positioning signal generated by the robot at the current location reaches the signal processor through transmission in the first direction along the positioning wire; and determining the second time point at which the second positioning signal generated by the robot at the current location returns to the signal processor after being transmitted in the second direction along the positioning wire to another end of the positioning wire.

10. The robot positioning method of claim 9, wherein the determining a distance between the current location and the signal processor based on the first time point, the second time point, a signal transmission speed of the positioning wire, and a length of the positioning wire comprises:

determining that the first time point, the second time point, the signal transmission speed, and the length of the positioning wire satisfy a third

relationship:

$$\begin{cases} 2L6 = |T6 - T5| * V \\ L5 + L6 = L \end{cases}$$

wherein L5 is a wire length over which the first positioning signal is transmitted on the positioning wire, L6 is a wire length over which the second positioning signal is transmitted on the positioning wire, T5 is the first time point, T6 is the second time point, V is the signal transmission speed, and L is the length of the positioning wire; and

calculating L5 and L6 based on the third relationship, determining relative distances between the current location and the signal processor in different directions based on L5 and L6, and determining the distance based on the relative distances.

11. The robot positioning method of claim 1, wherein one end of the positioning wire is connected to the signal processor; and

determining a first time point and a second time point at which positioning signals with different directions reach an end point through transmission along the positioning wire according to a current location of the robot comprises:

> determining the first time point at which a positioning signal generated by the signal processor reaches the current location through transmission in a first direction through the positioning wire; and
> determining the second time point at which the positioning signal generated by the signal processor returns in a second direction to the current location after being transmitted in the first direction through the positioning wire to another end of the positioning wire.

12. The robot positioning method of claim 11, wherein the determining a distance between the current location and the signal processor based on the first time point, the second time point, a signal transmission speed of the positioning wire, and a length of the positioning wire comprises:

> determining that the first time point, the second time point, the signal transmission speed, and the length of the positioning wire satisfy a fourth relationship below:

$$\begin{cases} 2L8 = |T8 - T7| * V \\ L7 + L8 = L \end{cases}$$

wherein L7 is a wire length from the signal processor to the current location, L8 is a length from another end of the positioning wire to the current location, T7 is the first time point, T8 is the second time point, V is the signal transmission speed, and L is the length of the positioning wire; and

calculating L7 according to the fourth relationship, and determining the distance between the current location and the signal processor based on L7.

13. The robot positioning method of claim 1, wherein the determining, in response to the robot detecting a boundary signal of the positioning wire, a first time point and a second time point at which positioning signals with different directions reach an end point through transmission along the positioning wire according to a current location of the robot comprises:
in response to the robot detecting the boundary signal of the positioning wire and detecting that the boundary signal is greater than a preset signal threshold, determining the first time point and the second time point at which the positioning signals with the different directions at the current location of the robot reach the end point through transmission along the positioning wire.

14. The robot positioning method of claim 13, further comprising:
transmitting the boundary signal to the positioning wire in real time or transmitting the boundary signal to the positioning wire at a preset frequency.

15. The robot positioning method of claim 13, wherein the positioning wire comprises a first positioning wire and a second positioning wire, and the method further comprises:

> transmitting the boundary signal to the first positioning wire in real time or transmitting the boundary signal to the positioning wire at a preset frequency; and
> determining, in response to the robot detecting a boundary signal of the positioning wire, a first time point and a second time point at which positioning signals with different directions reach an end point through transmission along the positioning wire according to a current location of the robot comprises:
> determining, in response to the robot detecting the boundary signal of the first positioning wire, the first time point and the second time point at which the positioning signals with the different directions at the current location of the robot reach the end point through transmission along the second positioning wire.

**16.** The robot positioning method of claim 1, wherein the determining, in response to the robot detecting a boundary signal of the positioning wire, a first time point and a second time point at which positioning signals with different directions through transmission along the positioning wire according to a current location of the robot comprises:

determining, in response to the robot detecting the boundary signal of the positioning wire and sending an instruction to the signal processor to instruct the signal processor and the robot to enter a positioning detection state, the first time point and the second time point at which the positioning signals with the different directions at the current location of the robot reach the end point through transmission along the positioning wire.

**17.** The robot positioning method of claim 16, wherein the determining, in response to the robot detecting the boundary signal of the positioning wire and sending an instruction to the signal processor to instruct the signal processor to enter a positioning detection state, the first time point and the second time point at which the positioning signals with the different directions at the current location of the robot reach the end point through transmission along the positioning wire comprises:

determining, in response to the robot detecting the boundary signal of the positioning wire and sending the instruction to the signal processor to instruct the signal processor or the robot to generate the positioning signals and turn on a timer, the first time point and the second time point at which the positioning signals with the different directions at the current location of the robot reach the end point through transmission along the positioning wire.

**18.** The robot positioning method of claim 1, further comprising:

determining whether the robot has moved to a charging base station; and
in response to determining that the robot has moved to the charging base station, stopping the transmission of the boundary signal and/or the positioning signal.

**19.** The robot positioning method of claim 1, wherein the determining positioning information of the robot based on the distance comprises:

sending, by the signal processor, the distance to the robot, and determining, by the robot, the positioning information based on the distance; or
determining, by the signal processor, the positioning information of the robot based on the distance and sending the positioning information to the robot; or
determining, by the robot, the positioning information of the robot based on the distance.

**20.** A robot positioning method, wherein a positioning wire is arranged in a preset area in which a robot walks, and the positioning wire is configured to transmit a positioning signal, the method comprises:

determining a plurality of pieces of positioning information of the robot by the method of any one of claims 1 to 19 in a process in which the robot moves along the positioning wire by a preset positioning distance, wherein the preset positioning distance is not less than a working distance of the robot; and
matching the plurality of pieces of positioning information against a pre-established positioning information set to determine a current location of the robot.

**21.** The method of claim 20, wherein a method for the robot to move along the positioning wire by the preset positioning distance comprises:

in response to presence of an obstacle that blocks the movement of the robot in the process of the robot moving along the positioning wire, controlling the robot to bypass the obstacle; and
in response to the robot having bypassed the obstacle, controlling the robot to continue to move along the positioning wire, so that a distance by which the robot moves along the positioning wire reaches the preset positioning distance.

**22.** The method of claim 21, wherein after the distance by which the robot moves along the positioning wire reaches the preset positioning distance, the method further comprises:

controlling the robot to move backward or turn around and then advance to a preset location point on a planned path;
controlling the robot to turn to a fourth direction at the preset location point; and
controlling the robot to move in the fourth direction.

**23.** The method of claim 21, wherein after the distance by which the robot moves along the positioning wire reaches the preset positioning distance, the method further comprises:

controlling the robot to turn to a fourth direction; and
controlling the robot to move in the fourth direction.

24. The method of claim 23, wherein after controlling the robot to move in the fourth direction, the method further comprises:

determining whether the robot has moved onto the positioning wire; and
in response to determining that the robot has moved onto the positioning wire, controlling the robot to turn and move in a fifth direction by a first distance,
wherein the fifth direction is opposite to the third direction, and the first distance is a distance projected in the third direction or the fifth direction when the robot is controlled to follow an edge of the obstacle.

25. The method of claim 23, wherein after controlling the robot to move in the fourth direction, the method further comprises:

determining whether the robot has moved onto the positioning wire; and
in response to determining that the robot has moved onto the positioning wire, controlling the robot to turn and move in a fifth direction by a second distance,
wherein the fifth direction is opposite to the third direction, and the second distance is determined by a distance projected in the third direction or the fifth direction when the robot is controlled to follow an edge of the obstacle, the preset positioning distance, and a first working distance.

26. The method of claim 25, wherein after controlling the robot to move in the fifth direction by the second distance, the method further comprises:

controlling the robot to perform a mowing operation according to the first working distance or a second working distance,
wherein the second working distance is determined by the second distance.

27. The method of any one of claims 20 to 26, wherein a method for obtaining the pre-established positioning information set comprises:

controlling the robot to move over the positioning wire at least one circle, and acquiring positioning signals of different locations during the movement; and
acquiring a plurality of pieces of positioning information of the robot according to the positioning signals, and determining the plurality of pieces of positioning information as the pre-established positioning information set.

28. The method of claim 17, wherein in the process of controlling the robot to move over the positioning wire at least one circle, the method comprises:

determining whether the robot has reached an edge-following closure point; and
in response to determining that the robot has reached the edge-following closure point, controlling the robot to continue to move along the positioning wire by the preset positioning distance.

29. The method of claim 27, wherein in the process of controlling the robot to move over the positioning wire at least one circle, the method comprises:
adjusting a frequency at which the robot determines location points on the positioning wire according to a bending curvature of the positioning wire, a walking speed of the robot, and a pose change speed of the robot, to determine pose data of the robot when the robot is at the location points on the positioning wire.

30. A robot positioning system, wherein a positioning wire is arranged in a preset area in which a robot walks, and at least one of two ends of the positioning wire is connected to a signal processor, the system comprises:

a first determining unit, configured for determining, in response to the robot detecting a boundary signal of the positioning wire, a first time point and a second time point at which positioning signals with different directions reach an end point through transmission along the positioning wire according to a current location of the robot;
a second determining unit, configured for determining a distance between the current location and the signal processor based on the first time point, the second time point, a signal transmission speed of the positioning wire, and a length of the positioning wire; and
a third determining unit, configured for determining positioning information of the robot based on the distance.

31. A robot, comprising:

a memory, configured for storing a computer program; and
a processor, configured for executing the computer program, wherein the computer program, when executed by the processor, causes the processor to perform the robot positioning method of any one of claims 1 to 29.

S11

Determine, after the robot detects a boundary signal of the positioning wire, a first time point and a second time point at which positioning signals with different directions reach an end point through transmission along the positioning wire according to a current location of the robot

S12

Determine a distance between the current location and the signal processor based on the first time point, the second time point, a signal transmission speed of the positioning wire, and a length of the positioning wire

S13

Determine positioning information of the robot based on the distance

FIG. 1

11

L1                                                                L2

10

FIG. 2a

FIG. 2b

FIG. 2c

11

L7

A

L8

10

B

FIG. 2d

S21

Determine a plurality of pieces of positioning information of the robot by the robot positioning method in a process in which the robot moves along the positioning wire by a preset positioning distance

S22

Match the plurality of pieces of positioning information against a pre-established positioning information set to determine a current location of the robot

FIG. 3

20

FIG. 4a

FIG. 4b

FIG. 4c

FIG. 4d

31

32

33`

22

30

FIG. 4e

FIG. 5

FIG. 6

FIG. 7

## INTERNATIONAL SEARCH REPORT

| International application No. |
|---|
| **PCT/CN2023/123748** |

| A. | CLASSIFICATION OF SUBJECT MATTER |
|---|---|

G01C21/00(2006.01)i; A01D34/00(2006.01)i

According to International Patent Classification (IPC) or to both national classification and IPC

| B. | FIELDS SEARCHED |
|---|---|

Minimum documentation searched (classification system followed by classification symbols)

IPC: G01C A01D

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 超星, CHAOXING; VEN; USTXT; EPTXT; WOTXT; IEEE: 机器人, 割草, 边界, 定位, 电线, 时间, 传输, 速度, 距离, robot, mow, boundary, position+, locat+, wire, cable, time, transmission, speed, distance

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 105988471 A (POSITEC POWER TOOLS (SUZHOU) CO., LTD.) 05 October 2016 (2016-10-05) <br> description, paragraphs [0001]-[0074], and figures 1-3 | 1-31 |
| A | CN 114915048 A (BEIJING XIAOMI MOBILE SOFTWARE CO., LTD.) 16 August 2022 (2022-08-16) <br> entire document | 1-31 |
| A | KR 20150125508 A (LG ELECTRONICS INC.) 09 November 2015 (2015-11-09) <br> entire document | 1-31 |
| A | KR 20160128124 A (LG ELECTRONICS INC.) 07 November 2016 (2016-11-07) <br> entire document | 1-31 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 November 2023** | **24 November 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
|---|
| **PCT/CN2023/123748** |

| Patent document cited in search report | | | Publication date (day/month/year) | Patent family member(s) | | | Publication date (day/month/year) |
|---|---|---|---|---|---|---|---|
| CN | 105988471 | A | 05 October 2016 | None | | | |
| CN | 114915048 | A | 16 August 2022 | None | | | |
| KR | 20150125508 | A | 09 November 2015 | KR | 101659031 | B1 | 23 September 2016 |
| KR | 20160128124 | A | 07 November 2016 | KR | 102439184 | B1 | 02 September 2022 |

Form PCT/ISA/210 (patent family annex) (July 2022)

**REFERENCES CITED IN THE DESCRIPTION**

**Patent documents cited in the description**

- CN 2022116652777
- CN 2023109306401